(19)

Europäisches Patentamt
European Patent Office
Office européen des brevets

(11) **EP 3 896 482 B1**

(12) **EUROPEAN PATENT SPECIFICATION**

(45) Date of publication and mention
of the grant of the patent:
**14.08.2024 Bulletin 2024/33**

(21) Application number: **20169572.3**

(22) Date of filing: **15.04.2020**

(51) International Patent Classification (IPC):
*G01S 7/40* (2006.01)          *G01S 13/90* (2006.01)
*G06N 3/08* (2023.01)

(52) Cooperative Patent Classification (CPC):
**G01S 7/4052; G01S 13/9023; G06N 3/08;**
G06N 3/045

(54) **METHOD FOR THE COMPUTER-IMPLEMENTED GENERATION OF A SYNTHETIC DATA SET FOR TRAINING A CONVOLUTIONAL NEURAL NETWORK FOR AN INTERFEROMETRIC SAR**

VERFAHREN ZUR COMPUTERIMPLEMENTIERTEN ERZEUGUNG EINES SYNTHETISCHEN DATENSATZES ZUM TRAINIEREN EINES NEURONALEN FALTUNGSNETZES FÜR EIN INTERFEROMETRISCHES SAR

PROCÉDÉ DE GÉNÉRATION MISE EN OEUVRE PAR ORDINATEUR D'UN ENSEMBLE DE DONNÉES SYNTHÉTIQUES POUR L'APPRENTISSAGE D'UN RÉSEAU NEURONAL CONVOLUTIONNEL D'UN SAR INTERFÉROMÉTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.10.2021 Bulletin 2021/42**

(73) Proprietors:
• **Deutsches Zentrum für Luft- und Raumfahrt e.V.**
**51147 Köln (DE)**
• **Università di Trento**
**38122 Trento (IT)**

(72) Inventors:
• **Sica, Francescopaolo**
**51147 Köln (DE)**
• **Gobbi, Giorgia**
**51147 Köln (DE)**

• **Rizzoli, Paola**
**51147 Köln (DE)**
• **Bruzzone, Lorenzo**
**38122 Trento (IT)**

(74) Representative: **Fink Numrich**
**Patentanwälte PartmbB**
**Paul-Gerhardt-Allee 24**
**81245 München (DE)**

(56) References cited:
**CN-A- 101 876 704      CN-A- 109 558 859**

• **KOTTAYIL NAVANEETH KAMBALLUR ET AL: "Accurate Pixel-Based Noise Estimation for InSAR Interferograms", 2018 IEEE SENSORS, IEEE, 28 October 2018 (2018-10-28), pages 1 - 4, XP033477397, DOI: 10.1109/ICSENS.2018.8589665**

EP 3 896 482 B1

**Description**

The invention relates to a method for the computer-implemented generation of a synthetic data set for training a convolutional neural network for an Interferometric Synthetic Aperture Radar.

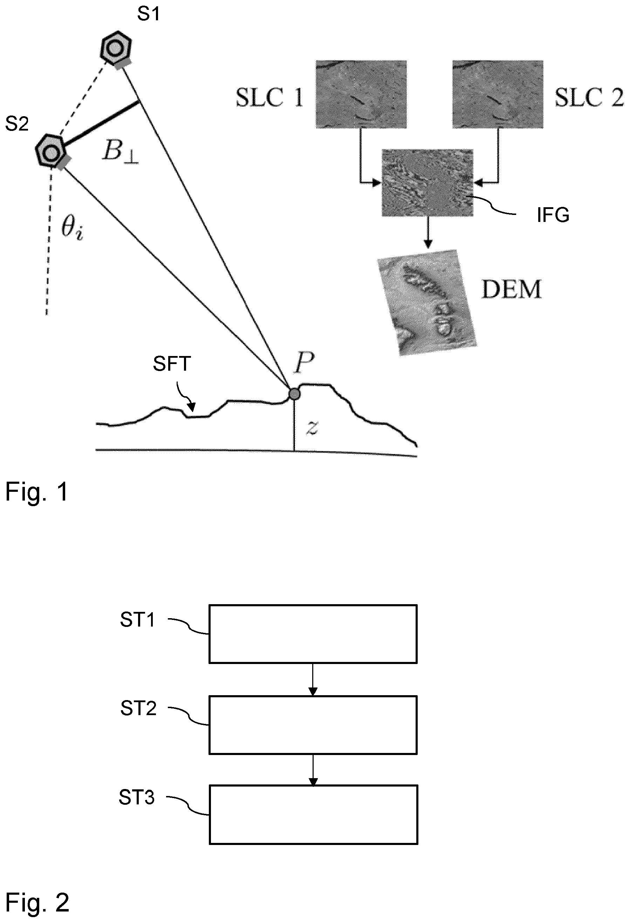

Synthetic Aperture Radar Interferometry (InSAR) is a key remote sensing technique for the study of the geosphere. To the most significant applications belong e.g. the retrieval of surface topography SFT, i.e. digital elevation models DEM, and the observation of deformations. InSAR is based on the coherent acquisition of at least two complex SAR images SLC1, SCL2, called Single Look Complex (SLC). The phase difference between two SLCs SLC1, SLC2 (called interferometric phase or simply interferogram IFG) acquired from two slightly different sensor positions, encodes the information about the surface (terrain) topography SFT, as presented in Fig. 1. The acquisition geometry of the two SAR systems S1, S2 acquiring the SAR images SLC1, SLC2 is defined by an orthogonal baseline $B_\perp$, a look angle $\theta_i$, and an altitude of the SAR Systems S1, S2. Likewise, if a temporal separation between the two SLCs SLC1, SLC2 is present, a further phase term can be retrieved, caused by changes in the ground topography occurred during the time between the observations.

The interferometric phase measurement is normally affected by noise, which arises depending on the nature of the observed scattering mechanism, the atmospheric conditions, as well as the acquisition geometry and sensor parameters. As the interferometric phase is wrapped in a $2\pi$ interval, a further processing step is necessary to retrieve the absolute phase value. This nontrivial procedure, called phase unwrapping, is the process to add and subtract to each pixel multiples of $2\pi$ phase values in order to reconstruct a phase field that is consistent all over the image. This procedure is heavily impacted by phase noise. To overcome this problem a set of reliable (less noise-affected) pixels is selected according to the degree of correlation between the interferometric pair. This last quantity is the complex correlation between SLCs SLC1, SLC2 also indicated as coherence.

A precise estimation of the interferometric phase and coherence is therefore a key aspect for the correct application of the InSAR technique and, consequently, the retrieval of topographic information. The peculiarities of the interferometric signal, the backscatter mechanism, and its statistical description are all critical aspects to consider in order to properly estimate phase and coherence for a large variety of cases.

Recently, Deep Learning (DL) approaches, mainly based on the exploitation of Convolutional Neural Networks (CNN) have overcome traditional methods for the estimation of the true signal disrupted by noise in a large variety of applications.- However, CNNs based approaches are applicable only if a large data set (comprehensive of ground truth examples) is available for the training phase, which is normally not the case in remote sensing applications.

The formation of such a large and variegated data set can instead rely on the generation of synthetic data, which is by far a much more critical aspect than the design of the network itself. Indeed, the creation of a synthetic data set should generalize the estimation problem to all the possible circumstances that can appear in real interferometric SAR data. Actually, the interferometric signal may significantly vary from scene to scene depending on the acquisition geometry, the radar sensor parameters and acquisition modes, as well as the land cover of the imaged area.

Traditional methods for the estimation of the interferometric phase and coherence can be classified into two main categories: spatial-domain and transformed-domain approaches.

The spatial-domain approaches are mainly based on the assumption of wide-sense local stationarity (smooth variation) of the interferometric signal in a given neighborhood. Under this hypothesis, a Maximum-Likelihood approach is proposed in [1] and further improved in [2], [3] by modifying the estimation window shape according to the shape and orientation of the interferometric fringes. In this case, the only aspect, which is considered for the modeling of the InSAR signal, is that the interferometric phase signal is characterized by the presence of $2\pi$ phase fringe patterns at different density, which depend on the acquisition geometry, the sensor parameters, and the scene topography. Further developments of spatial-domain filters are based on a large variety of patch-based approaches [4][5][6][7]. Here, the basic idea is the research of similar pixels prior to the actual filtering. In this way the predictors are selected according to a suitable distance metric rather than chosen as the spatially closest ones.

The transformed-domain category, instead, starts from the observation that the interferometric signal can be easily described in terms of alternative basis functions, as for examples the Fourier's one [8], [9], and the wavelet one [10]. In these cases, no assumptions are made on the amplitude values, while the phase is generated as fringe patterns of varying density and the coherence has only a slow varying spatial trend.

Only recently, following the fast development of Deep Learning techniques and their application to image denoising [11] [12], novel approaches based on Convolutional Neural Networks (CNNs) have been introduced in this field, showing very promising results [13][14]. In these works, the authors propose different network architectures based on the one presented in [12], while the training is performed on synthetic [13] or on real [14] data, respectively. In the first case, the synthetic training data are generated according to the observation of open pit mines only, which is a very specific observation scenario characterized by abrupt phase changes [13]. On the other hand, the training based on real data exploits a pre-processing of the data in order to approximate an almost clean reference [14].

The performance of CNNs strongly depends on the strategy used for the training of the network itself. In order to achieve an effective estimation, a CNN needs to be trained with a large and variegated data set, which is able to represent the totality or, at least, the majority of the complex cases that can be observed in nature.

The use of real InSAR data for training the network requires pre-processing to approximate a noise-free reference [14]. If such data are then used for training a CNN, the latter will be able, at best, to estimate a still slightly noisy version of the real signal. This strategy does not allow for a proper training process of the network, which also learns the artefacts and residual noise contribution of the employed pre-processing method.

In order to overcome such a limitation, one can mainly rely on the generation of synthetic data sets. In this way, the performance of the CNN estimator is highly influenced by the generalization capability and specificity of the used training data set [15]. Indeed, it is typical that a proposed methodology, based on a given CNN model, performs very well on the analyzed data set, while it performs poorly when tested on a different data set or on real data, as shown by the work in [13]. A proper training data set should instead include significant samples, which are able to correctly model the physical phenomena actually observed in real data.

CN 109 558 859 A discloses a method for computer-implemented generation of a synthetic data set for training a CNN for an InSAR system. According to this method, a number of interferometric phase images which is generated from a respective digital elevation model is retrieved. Each digital elevation model is back-geocoded from an image taken with a SAR system using a known acquisition geometry.

CN 101 876 704 B1 discloses a method for simulating three-dimensional land scene echoes of an InSAR system. The method comprises the steps of, firstly, performing geometric modeling on three-dimensional land scenes and dividing the three-dimensional land scenes into facets which are adjacent to each other; then, performing electromagnetic modeling by using the facets as scatterers and calculating backscattering coefficients of the scatterers; and finally, generating echoes in parallel by calculating a single echo according to a signal model of an InSAR system.

It is therefore the object of the present invention to provide an effective strategy for the creation of a synthetic data set of interferometric data for training a CNN.

This object is solved by methods according to the independent claims. Preferred embodiments are set out in the dependent claims.

The invention provides a method for the computer-implemented generation of a synthetic data set for training a convolutional neural network for an Interferometric Synthetic Aperture Radar (InSAR). According to the method of the invention, the following steps i) to iii) are performed. In step i), a number of interferometric phase images being generated from a respective digital elevation model, DEM, is retrieved, where each digital elevation model, DEM, is back-geocoded from an image taken with a SAR system using a known acquisition geometry. In order to be able to properly generalize the problem, the generation process of a training data set considers an acquisition geometry, e.g. the spatial orthogonal baseline between two sensors, imaged scene properties, such as the land cover and the topography, as well as sensor parameters, such as the resolution, the acquisition mode, and the operative wavelength. In step ii), a number of amplitude images and coherence images is generated by providing different patterns derived from two sets, a first set comprising ramp profiles representing an increasing trend in one direction and a second set comprising natural patterns corresponding to scenarios taken from remotely sensed optical images and by mapping the natural pattern digital values into a same scale used for the ramp profile digital values. The ramp profiles can be regarded as digital values having a pure linear trend. In step iii), a number of noisy images is generated by repeatedly grouping one of the phase images, one of the amplitude images and one of the coherence images into a triple and combining each triple to form a respective noisy image, wherein each of the noisy images is assigned to one of a plurality of different categories.

The method provides a methodology for the standardization of the generation procedure of a synthetic data set, which is suitable for training CNNs for InSAR parameters estimation. The generation of the training set is based on the simulation of typical behaviors occurring in real InSAR data.

According to a preferred embodiment, the phase images are classified into one of two different categories, where the phase images of a first category of the two different categories are characterized by the presence of fringe patterns at low frequency and the phase images of a second category of the two different categories are characterized by the presence of fringe patterns at high frequency. Fringe patterns at low frequency correspond to flat terrain. Fringe patterns at high frequency correspond to high-relief terrain. The presence of both, relatively flat and high-relief terrain allows for the generation of synthetic interferograms, characterized by the presence of low- and high-frequency fringes, respectively.

According to a further preferred embodiment, a first part of the amplitude images is represented by a first ramp profile with an increasing trend from left-to-right, or vice versa. A second part of the amplitude images is represented by a second ramp profile with an increasing trend from top-to-bottom, or vice versa. In addition, a third part of the amplitude images is represented by the natural patterns, where the natural pattern digital values are mapped into a first scale used for the ramp profile digital values.

According to a further preferred embodiment, a first part of the coherence images is represented by a ramp profile with an increasing trend from left-to-right, or vice versa. A second part of the coherence images is represented by the natural patterns, where the natural pattern digital values are mapped into a second scale used for the ramp profile digital values, the second scale being different from the first scale. In particular, the second scale consists of digital values between 0 and 1, where digital values of the natural pattern and/or the ramp profile being smaller than a first threshold value are assigned to a random value between 0 and the first threshold value. This pre-processing enables correcting small values as they are redundant variations that add uncontrolled noise.

According to a further preferred embodiment, the natural patterns display a large variety of different scenarios, ranging from natural environments to man-made structures. Therefore, they are well suited for training the neural network on features which can be found in nature. For example, use of the NWPU-RESISC45 [17] images can be made, which can be downloaded at [18].

According to a further preferred embodiment, the phase images, the amplitude images and the coherence images are grouped in at least two of the following number of different categories. Preferably, all of the following six categories will be used for generating the set of training data.

Category C1: a given number of amplitude images of the first part of the amplitude images; the same given number of coherence images of the first part of the coherence images; and a part of the given number of phase images of the first category and the remainder of the given number of phase images of the second category.

Category C2: a given number of amplitude images of the second part of the amplitude images; the same given number of coherence images of the first part of the coherence images; and a part of the given number of phase images of the first category and the remainder of the given number of phase images of the second category.

Category C3: a given number of amplitude images of the third part of the amplitude images; the same given number of coherence images of the first part of the coherence images; and a part of the given number of phase images of the first category and the remainder of the given number of phase images of the second category.

Category C4: a given number of amplitude images of the second part of the amplitude images; the same given number of coherence images of the second part of the coherence images; and a part of the given number of phase images of the first category and the remainder of the given number of phase images of the second category.

Category C5: a given number of amplitude images of the third part of the amplitude images; the same given number of coherence images of the second part of the coherence images; a part of the given number of phase images of the first category and the remainder of the given number of phase images of the second category.

Category C6: a given number of amplitude images of the third part of the amplitude images; the same given number of coherence images of the second part of the coherence images; and the same given number of phase images of a third category characterized by the presence of steps. The phase images of category C6 enable considering abrupt phase jumps.

The proposed combination of different patterns aims at simulating possible behaviors which can be found in real InSAR data. In particular, one can notice that amplitude and coherence can either be directly correlated (as in category C1, where two left-to-right ramps, or vice versa, are used, or in categories C5 and C6, where natural patterns are used) or uncorrelated (as in categories C2, C3, and C4).

In order to explain the meaning of this choice, reference is made to the coherence factorization presented by Zebker and Villasenor in [19] and extended by Krieger et al. in [20], where

$$\rho_{Tot} = \rho_{Quant}\,\rho_{Amb}\rho_{Rg}\,\rho_{Az}\,\rho_{Temp}\,\rho_{SNR}\,\rho_{Vol}$$

being $\rho_{Tot}$ the total interferometric coherence, and where the other terms describe the contributions due to quantization $\rho_{Quant}$, ambiguities $\rho_{Amb}$, baseline decorrelation $\rho_{Rg}$, relative shift of the Doppler spectra $\rho_{Az}$, temporal decorrelation $\rho_{Temp}$, thermal noise $\rho_{SNR}$, and volume decorrelation $\rho_{Vol}$.

The first four terms on the right-hand side (i.e. $\rho_{Quant}$, $\rho_{Amb}$, $\rho_{Rg}$, $\rho_{Az}$) of the equation are related to specific sensor parameters and acquisition geometry, while the last three ($\rho_{Temp}$, $\rho_{SNR}$, and $\rho_{vol}$) show a dependency on the specific characteristics of the illuminated scene on ground and, therefore, on the kind of ongoing backscattering mechanism. For this reason, in order to generate a meaningful training set, the possible relationships between coherence and backscatter (in our case, simply the amplitude) is simulated, by assuming the predominance of one of this three decorrelation contributions at a time. This will be explained more detailed in the description of an example of the invention.

According to a further preferred embodiment, the phase images of the third category is generated based on a coherence image characterized by the presence of fringe patterns at low frequency by pixelwise segmenting the corresponding coherence for digital values above a second threshold value, using two different intervals, a first interval being defined between the second threshold value and a third threshold value, and a second interval being defined between the third threshold value and 1, associating a random constant phase jump to each segment, allowing for phase jumps up to $\pi$; and adding the phase jump to a phase image of the first category. For the relationship between the first, the second and the third threshold value, it holds third threshold value > second threshold value > first threshold value. The phase jump results from two or more adjacent smaller phase jumps.

This embodiment pays special attention to category C6, which is characterized by a different kind of phase pattern, with respect to all the other categories C1 to C5. Here, the aim is to simulate the behavior of point-like scatterers or man-made structures, such as buildings. In these cases it is possible to see abrupt phase jumps in the data, in correspondence of a change in height of the considered feature and is therefore reasonable to associate such jumps to correlated high values of both, amplitude and coherence.

According to a further preferred embodiment, a combination of one phase image, one amplitude image and one coherence image of a respective category is performed to derive an observed normalized complex interferogram. The combination consists of amplitude and coherence patterns of the categories C1 to C6 with the interferometric phase images at low- and high-frequency fringe patterns.

The invention further relates to a method for training a convolutional neural network for an Interferometric Synthetic Aperture Radar. According to the method of the invention, the following steps i) and ii) are performed. In step i), a synthetic training data set with noisy images according to one or more preferred embodiments of the invention is generated. In step ii), the convolutional neural network is trained with the training data set.

According to a preferred embodiment, the convolutional neural network is based on a U-Net model using a three-layer decoding path with skip connections.

According to a further preferred embodiment, at each layer, in a residual block architecture, an input is connected to an output through a shortcut connection in order to match the output dimensions with the input ones.

According to another preferred embodiment, the noisy input data being presented by a complex interferogram is preprocessed by normalizing the complex interferogram and subsequently by decorrelating the data.

According to another preferred embodiment, the normalization comprises computing a normalized complex interferogram from the noisy image, estimating an amplitude by averaging intensities of two complex SAR images of the noisy image, where the estimation is applied to real and imaginary parts separately, and applying a maximum-likelihood estimation of the amplitude within a two-dimensional window.

According to another preferred embodiment, for optimization of network parameters of the convolutional neural network a L2-norm ($L_2$) loss function is exploited, together with a regularization term ($R$), which applies to output values of the convolutional neural network if its absolute value is outside the interval [-1,1]. The overall loss function $L$ is defined as:

$$L\left(a_0, b_0, \hat{a}, \hat{b}\right) =$$
$$= L_2\left(a_0 - \hat{a}, b_0 - \hat{b}\right) + \lambda \cdot R\left(\hat{a}, \hat{b}\right) = \left\|\left[a_0 - \hat{a}, b_0 - \hat{b}\,\right]\right\|_2 +$$
$$\lambda \cdot \left\|\max\left(0, \left|\left[\hat{a}, \hat{b}\right]\right| - 1\right)\right\|_1$$

where $a$ and b are decorrelated quantities corresponding to the real and imaginary parts of the noisy normalized complex interferogram, while the subscript 0 and the hat symbol indicate the corresponding noise-free and estimated parameters, respectively, and the term $\lambda$ weights the regularization function with respect to the L2-norm.

Moreover, the invention refers to a computer program product with a program code, which is stored on a non-transitory machine-readable carrier, configured for carrying out the method according to the invention or one or more preferred embodiments thereof when the program code is executed on a computer.

An embodiment of the invention will now be described in detail with respect to the accompanying drawing.

Fig. 1    shows a simplified scheme of SAR interferometry, from the generation of the interferogram to the retrieval of the topographic information.

Fig. 2    shows a schematic diagram illustrating the method for training a convolutional neural network for an Interferometric Synthetic Aperture Radar according to the invention.

Fig. 3    shows examples of synthetic phase images of three different categories generated from digital elevation model data.

Fig. 4    shows amplitude and coherence images for the generation of the synthetic training data set according to 6 different categories.

Fig. 5    shows an example of a phase image according to a third category comprising phase jumps and a simplified plot describing a total phase jump resulting from two smaller phase jumps.

Fig. 6    shows noisy phase images resulting from a combination, for each category C1 to C6, of the corresponding amplitude and coherence patterns depicted in Fig. 4 with two exemplary synthetic phase images depicted in Fig. 3.

Fig. 7 shows the application of a training data set in an exemplary Convolutional Neural Network.

Fig. 8 shows a schematic residual block operations diagram used in the Convolutional Neural Network depicted in Fig. 7.

Fig. 9 shows a table with performance results on the synthetic data set compared to prior art methods.

The present invention provides a methodology for the standardization of the generation procedure of a synthetic data set, which is suitable for training CNNs for InSAR parameters estimation. The problem of the training set generation is solved by simulating typical behaviors occurring in real InSAR data. For statistically modeling the interferometric SAR signal, a SLC (Single Look Complex) as depicted in Fig. 1 and acquired by a SAR system is assumed to be a complex circular Gaussian variable, accordingly to the statistical description of coherent radar measurements in [1] for the statistical description of the interferometric signal.

The complex interferogram $\Gamma$ (noisy data) is defined as the complex conjugate product of the two SLCs ($z_1, z_2$):

$$\Gamma = z_1 \cdot z_2^* . \qquad (1)$$

The complex interferogram can be written as a function of its noise-free parameters by considering the following notation [6][7]:

$$\begin{pmatrix} z_1 \\ z_2 \end{pmatrix} = T \begin{pmatrix} u_1 \\ u_2 \end{pmatrix}, \qquad (2)$$

where ($u_1, u_2$) is a vector of two standard circular Gaussian random variables. $T$ is the Cholesky decomposition of the data covariance matrix and can be expressed as a function of the InSAR noise-free parameters as:

$$T = \begin{pmatrix} A & 0 \\ A\rho e^{-j\varphi} & A\sqrt{1-\rho^2} \end{pmatrix}, \qquad (3)$$

where $A$ is the amplitude, (which is assumed to be equal for both SLCs SLC1, SLC2, $\varphi$ is the interferometric phase, and $\rho$ is the coherence.

The observed complex interferogram can therefore be written as the sum of the noise-free normalized interferogram $\Gamma_0$ and the noise term n as:

$$\Gamma = z_1 \cdot z_2^* = \Gamma_0 + n, \qquad (4)$$

where $\Gamma_0$ depends on the noise-free interferometric phase and coherence only as:

$$\Gamma_0 = A_1 A_2 \rho e^{j\varphi} \qquad (5)$$

and n is a zero-mean signal-dependent contribution, which can be expressed as:

$$n = A_1 A_2 \rho e^{j\varphi} (|u|^2\text{-}1) + A_1 A_2 \sqrt{1-\rho^2} u_1 u_2^* \qquad (6)$$

and is characterized by the following covariance matrix:

$$C_n = \frac{1}{2} A_1{}^2 A_2{}^2 \begin{pmatrix} 1 + \rho^2 \cos(2\varphi) & \rho^2 \sin(2\varphi) \\ \rho^2 \sin(2\varphi) & 1 - \rho^2 \cos(2\varphi) \end{pmatrix} \qquad (7)$$

being the terms on the main diagonal the variances of the real and imaginary parts of the noise and the off-diagonal term their mutual correlation. The normalized complex interferogram is defined as:

$$\gamma = \frac{\Gamma}{\hat{A}^2} \qquad (8)$$

where $\hat{A}$ is an estimation of $A$.

The simulated noise depends on the choice of the set of initial noise-free parameters (amplitude, phase, and coherence). Therefore, their choice is a key aspect for the generation of the training data set. For this aim, guidelines proposed in [15] may be used, which are expected to be considered in order to generate a training set that represents the generality of the problem. The approximation component refers to the representation of the main background physical information, while the detail component aims at completing the description of the physical problem by introducing realistic complex variations. In the present method, the approximation component is achieved by considering the interdependence between the noise-free interferometric parameters. Then the detail component is introduced by taking into account realistic spatial variation patterns for each of them.

Regarding the approximation component, different relationships among parameters are used to model real InSAR data. A recurring scenario comprises an interferometric phase and amplitude that show weakly correlated patterns or no correlation at all, whereas such dependence is often present between coherence and amplitude. For the detail component, each parameter can be assumed to present either smooth variation trends or abrupt changes, depending on the type of illuminated target. Indeed, the interferometric phase presents fringe patterns of different spatial density depending on the local terrain slope, while the amplitude and the coherence may show slowly-varying textures, as well as edges and tiny details, in a similar way as natural patterns that can be found in optical images.

The proposed methodology for generating a synthetic data set for training a Convolutional Neural Network for the estimation of InSAR parameters is shown in Fig. 2. The following steps are performed.

In step ST1, a number of interferometric phase images being generated from a respective digital elevation model (DEM) is retrieved, where each digital elevation model (DEM) is back-geocoded from an image taken with a SAR system using a known acquisition geometry. In order to be able to properly generalize the problem, the generation process of a training data set considers an acquisition geometry, e.g. the spatial orthogonal baseline between two sensors, imaged scene properties, such as the land cover and the topography, as well as sensor parameters, such as the resolution, the acquisition mode, and the operative wavelength.

For the generation of the interferometric phase images φ, a real existing topographic scenario may be used. The acquisition geometry of a side-looking SAR system with a given spatial separation between the two acquisition points is simulated. For example, the TanDEM-X in StripMap acquisition mode covers an area of about 30 km × 50 km in range and azimuth, respectively, and can vary the spatial baseline from few to hundreds of meters. Given the acquisition geometry, the external digital elevation model (DEM) is back-geo-coded and the synthetic phase is generated. This allows the simulation of existing topographic profiles and, furthermore, includes the typical SAR deformations introduced by the side-looking nature of imaging radar measurements. For example, an edited version of the Shuttle Radar Topography Mission DEM [16] or a LiDAR DEM can be used. The presence of both, relatively flat and high-relief terrains, allows for the generation of synthetic interferograms IFG (see Fig. 1), characterized by the presence of low- and high-frequency fringes, respectively.

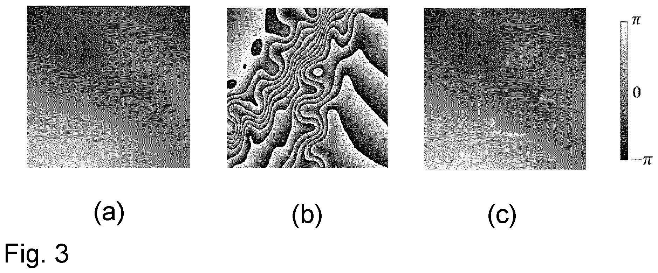

Fig. 3 shows at (a) an example of a synthetic interferometric phase image with low-frequency fringe patches which represents a phase image of a first category. An example of a synthetic interferometric phase image with high-frequency fringe patches is shown in Fig. 3 (b) which represents a phase image of a second category. In Fig 3 (c), a special variant of the phase image of the first category is shown which hereinafter represents a phase image of a third category.

The phase image in Fig. 3 (c) is characterized by a different kind of phase pattern, with respect to all the other ones. Here, the aim is to simulate the behavior of point-like scatterers or man-made structures, such as buildings. In these cases it is possible to see abrupt phase jumps in the data, in correspondence of a change in height of the considered feature and is therefore reasonable to associate such jumps to correlated high values of both, amplitude and coherence. The phase jumps are referred to as steps.

For the generation of the interferometric phase image of the third category, a coherence image is subdivided in smaller portions, which are characterized by similar values. This operation is normally called segmentation and, in this specific case, it is used to create a correspondence between coherence jumps and the desired phase ones. Therefore the coherence map consisting of digital values of a second scale ranging from 0 to 1 is segmented for digital values above 0.6, using two different intervals: $0.6 < \rho < 0.8$ and $0.8 < \rho < 1$. Note that only large segments are preserved, while the smaller one is embedded into the surrounding segment. The values of 0.6 and 0.8 are threshold values and can be chosen in a different way from the given example. The lower value 0.6 represents a second threshold, the middle value of 0.8 represents a third threshold, and the value 1 is an upper boundary of a scale consisting of digital values used for the coherence images.

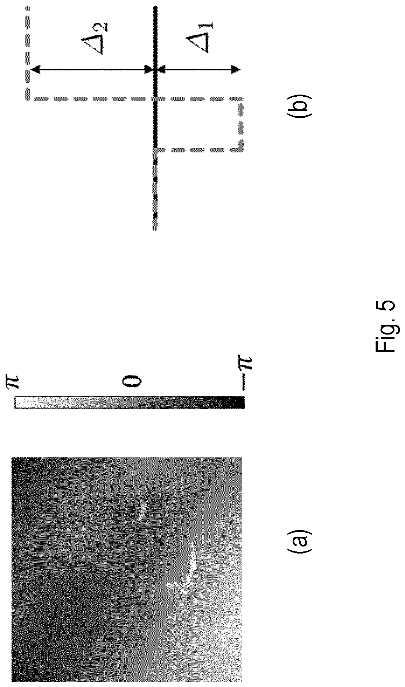

A random constant phase jump is then associated to each of the created segments, allowing for phase jumps up to $\pi$. In particular, it has to be noted that a certain phase jump $\Delta\Phi$ might be the result of the sum of two adjacent smaller jumps $\Delta 1$ and $\Delta 2$, as schematized in Fig. 5 (b). For this reason, the entity of each phase jump is randomly selected starting from a zero mean Gaussian distribution with variance $\sigma$, where the latter is retrieved by assuming that the 90% percentile ($3\sigma_\Phi$) of the distribution resulting from the sum of two Gaussian random variables has to equal $\pi$.

This assumption leads to the derivation of $\sigma = \pi\sqrt{2}/6$. Moreover, the choice of a Gaussian distribution resides in the fact that reasonably small phase jumps are assumed, in the order of a small fraction of the height of ambiguity (which identifies the topographic height change corresponding to a $2\pi$ cycle of the interferometric phase) and therefore corresponding to few meters in height, to occur with a higher probability in nature than bigger ones. The derived phase jumps are then added to low-frequency fringe patterns, achieving, e.g., the result presented in Fig. 5 (a) which corresponds to Fig. 3 (c).

In step ST2, a number of amplitude images and coherence images is generated by providing a set of different patterns derived from ramp profiles and from natural patterns and by mapping the natural pattern digital values into a scale used for the ramp profile digital values. The ramp profiles can be regarded as digital values having a pure linear trend.

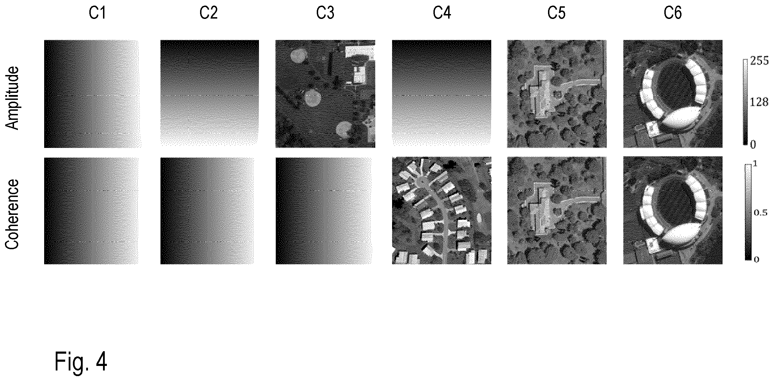

For the generation of amplitude and coherence images, a set of different patterns derived from ramp profiles and from natural patterns are defined, as depicted in Fig. 4.

In Fig. 4, six amplitude images are shown in the first row denoted with "Amplitude", while six coherence images are shown in the second row denoted with "Coherence". In particular, regarding linear trends, for the amplitude images two different ramp profiles are considered, whose digital values of a first scale shown on the right-hand side vary between 25 and 255, showing, by example only, an increasing trend left-to-right and top-to-bottom, respectively. On the other hand, for the coherence images, one single ramp profile is considered, whose values on the already mentioned second scale vary between 0 and 1, showing an increasing trend left-to-right. Additionally, for both, amplitude and coherence images, a set of synthetic images is created, associated to natural patterns. Any natural image dataset could in theory be chosen, but it is preferred to rely on remotely sensed optical images, which display a large variety of different scenarios, from natural environments to man-made structures and therefore are well suited for training the network on features which can be found in nature. For example images of the NWPU-RESISC45 [17] may be used, which can be downloaded at [18].

The amplitude and coherence images with natural patterns are derived by simply mapping the optical images digital values into the same first and second scale that is used for the synthetic ramp patterns, ranging from 25 to 255 for the amplitude images and from 0 to 1 for the coherence images. Preferably, coherence values lower than 0.2 are set to a random value between 0 and 0.2, in order to obtain a smoother coherence image, since it is reasonable to assume that at such coherence levels no signal information is present in real SAR data. The value of 0.2 is chosen, by way of example, and could be chosen differently. The value of 0.2 corresponds to a first threshold value. Finally, the use of ramps and natural patterns for both, amplitude and coherence, allows one to simulate low-varying trends and abrupt changes, respectively, which are typical behaviors to be found in real SAR data.

In step ST3, a number of noisy images is generated by repeatedly grouping one of the phase images, one of the amplitude images and one of the coherence images into a triple and combining each triple to form a respective noisy image, wherein each of the noisy images is assigned to one of a plurality of different categories. The mathematical operation that allows to combine together the generated phase, amplitude and coherence images is equation (2). Equation (2) is the matrix multiplication between the vector of two standard circular Gaussian random variables ($u_1$, $u_2$) and the matrix $T$ which can be expressed as a function of the InSAR noise-free parameters (which are the generated phase, amplitude and coherence images) according to equation (3). This allows to generate the aimed noisy data from standard circular Gaussian random variables: $u_1$ and $u_2$. In this way the noisy complex interferogram is a function of the noise-free parameters (which are the generated phase, amplitude and coherence images).

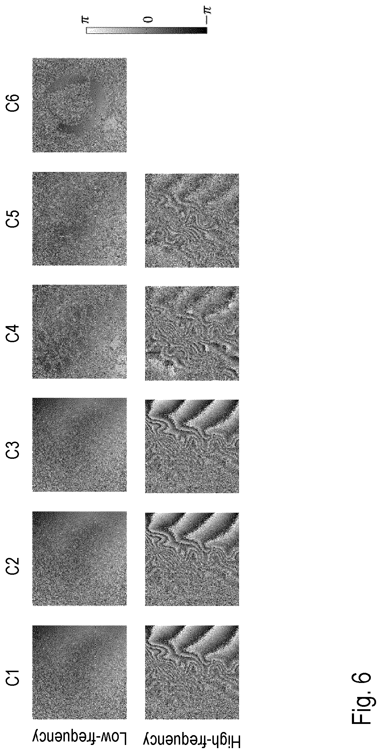

For the generation of the complete training data set, the different amplitude images, coherence images, and phase patterns are grouped into 6 different categories C1, ..., C6. The types of amplitude and coherence pattern used for each case are presented in Fig. 6 (one column per category), while concerning the phase patterns illustrated in Fig. 4. The definition of the six categories C1,..., C6 is as follows:

Category C1:

- a given number of amplitude images with a first ramp profile with an increasing trend from left-to-right, or vice versa;
- the same given number of coherence images with a ramp profile with an increasing trend from left-to-right, or vice versa;

- a part of the given number of phase images with low-frequency fringe phase patterns and the remainder of the given number of phase images with high-frequency fringe phase patterns;

Category C2:

- a given number of amplitude images with a second ramp profile with an increasing trend from top-to-bottom, or vice versa;
- the same given number of coherence images with a ramp profile with an increasing trend from left-to-right, or vice versa;
- a part of the given number of phase images with low-frequency fringe phase patterns and the remainder of the given number of phase images with high-frequency fringe phase patterns;

Category C3:

- a given number of amplitude images with natural patterns;
- the same given number of coherence images with a ramp profile with an increasing trend from left-to-right, or vice versa;
- a part of the given number of phase images with low-frequency fringe phase patterns and the remainder of the given number of phase images with high-frequency fringe phase patterns;

Category C4:

- a given number of amplitude images with a second ramp profile with an increasing trend from top-to-bottom, or vice versa;
- the same given number of coherence images with natural patterns;
- a part of the given number of phase images with low-frequency fringe phase patterns and the remainder of the given number of phase images with high-frequency fringe phase patterns;

Category C5:

- a given number of amplitude images with natural patterns;
- the same given number of coherence images with natural patterns;
- a part of the given number of phase images with low-frequency fringe phase patterns and the remainder of the given number of phase images with high-frequency fringe phase patterns;

Category C6:

- a given number of amplitude images with natural patterns;
- the same given number of coherence images with natural patterns;
- the same given number of phase images with natural patterns characterized by the presence of phase jumps (steps) as illustrated in Fig. 3 (c).

The proposed combination of different patterns aims at simulating possible behaviors which can be found in real InSAR data. In particular, one can notice that amplitude and coherence can either be directly correlated (as in Category C1, where two left-to-right ramps are used, or in Category C5 and C6, where natural patterns are used) or uncorrelated (as in Category C2, C3, and C4).

In order to explain the meaning of this choice, reference is made to the coherence factorization presented by Zebker and Villasenor in [19] and extended by Krieger et al. in [20], where

$$\rho_{Tot} = \rho_{Quant}\, \rho_{Amb}\rho_{Rg}\, \rho_{Az}\, \rho_{Temp}\, \rho_{SNR}\, \rho_{Vol} \qquad (9)$$

being $\rho_{Tot}$ the total interferometric coherence, and where the other terms describe the contributions due to quantization $\rho_{Quant}$, ambiguities $\rho_{Amb}$, baseline decorrelation $\rho_{Rg}$, relative shift of the Doppler spectra $\rho_{Az}$, temporal decorrelation $\rho_{Temp}$, thermal noise $\rho_{SNR}$, and volume decorrelation $\rho_{Vol}$.

The first four terms on the right-hand side (i.e. $\rho_{Quant}$, $\rho_{Amb}$, $\rho_{Rg}$, $\rho_{Az}$) of the equation are related to specific sensor parameters and acquisition geometry, while the last three ($\rho_{Temp}$, $\rho_{SNR}$, and $\rho_{Vol}$) show a dependency on the specific characteristics of the illuminated scene on ground and, therefore, on the kind of ongoing backscattering mechanism. For this reason, in order to generate a meaningful training set, the possible relationships between coherence and backscatter (in our case, simply the amplitude) is simulated, by assuming the predominance of one of this three decorrelation contributions at a time.

In particular, $\rho_{Temp}$ identifies the decorrelation caused by changes in the illuminated scene, occurred between the two subsequent SAR acquisitions forming the interferometric pair. In case of bistatic InSAR data $\rho_{Temp} = 1$ since both master and slave images are simultaneously acquired, while in repeat-pass InSAR, the amount of temporal decorrelation will depend on several factors, such as the repeat-pass time, the wavelength, and the type of land cover on ground. The presence of temporal decorrelation, might lead to uncorrelated amplitude and coherence, as in categories C2, C3, and C4 of the training set.

Moreover, $\rho_{SNR}$ identifies the amount of decorrelation due to thermal noise and can be written as

$$\rho_{SNR} = \frac{1}{1 + SNR^{-1}} \qquad (10)$$

where SNR represents the signal-to-noise ratio. It is assumed that it is the same for both master and slave acquisitions. $\rho_{SNR}$ is therefore proportional to the level of backscatter on ground and, if this represents the main source of decorrelation, then a direct correlation between the image amplitude and the coherence can be observed, which is what characterizes categories C1, C5, and C6 in the training set.

The last term $\rho_{Vol}$ identifies the decorrelation occurring because of volumetric scattering phenomena, and characterizes, e.g., areas where the radar waves can penetrate into a volume, such as forests or snow- and ice-covered regions. In this case, a certain amount of decorrelation can be experienced depending on the radar wavelength, the length of the orthogonal baseline, and the characteristics of the illuminated target on ground (e.g. forest type and density or dielectric properties of snow). A direct relationship between backscatter and coherence decay is therefore not to be expected. As an example one can consider a tropical rainforest, which is normally characterized by quite high and stable backscatter levels (e.g. -6.5 dB at C Band in the $\gamma^0$ projection [21]). As demonstrated by the bistatic TanDEM-X mission, which allows for the precise separation between $\rho_{Vol}$ and $\rho_{Temp}$, being the latter equal to 1, a certain amount of volume decorrelation occurs, depending on the acquisition geometry [22]. This specific case is therefore associated to uncorrelated amplitude and coherence images within the training set, as in categories C2, C3, and C4.

Finally, all the described combinations of amplitude, coherence, and interferometric phase are used to derive the observed normalized complex interferogram as previously described. An example of resulting noisy interferometric phase images is depicted in Fig. 6. Here, the amplitude and coherence patterns presented in Fig. 4 are combined (Categories C1 to C6) with the interferometric phase images at low- and high-frequency fringe patterns presented in Fig. 3. It is to be noted, that this is just an example meant to observe the effects of the different amplitudes and coherences on the same phase image, since in reality different phase patterns are used for each combination.

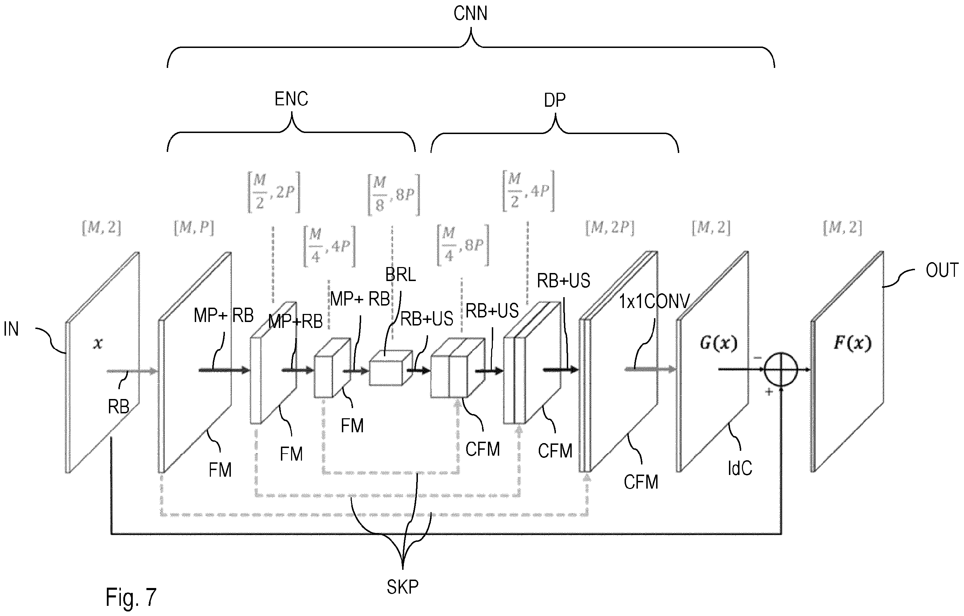

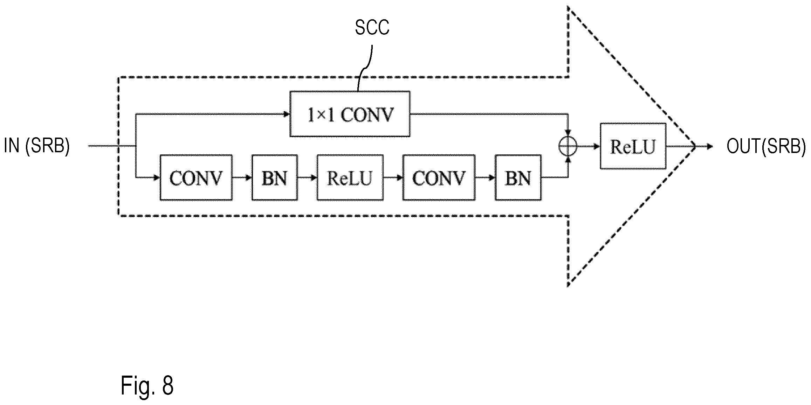

In Fig. 7, an example of the use of the proposed strategy to form a data set for the training of a CNN for the estimation of phase and coherence is provided. The CNN architecture in Fig. 7 is based on the known U-Net model. Particularly, one layer is removed from the original U-Net and a three-layer implementation is used instead. The reason of this choice relies in the fact that small input patches ($64 \times 64$ pixels) are processed and that a shallower architecture is easier to train. It has a smaller number of hyper-parameters to be optimized and thus requires a lower number of input samples (training patches). An encoder ENC consisting of feature maps FM is followed by a bridge layer BRL and, finally, by a three-layer decoding path DP with skip connections SKP. The three-layer decoding path DP consists of concatenated feature maps CFM. At each layer, instead of applying a classical cascade of convolutions, a residual block architecture is used which is represented in Fig. 8. In this residual block architecture, the input IN(SRB) of a single residual block is connected to the output OUT(SRB) of this single residual block through a shortcut connection SCC (1x1 convolution) in order to match the output dimensions with the input ones.

Fig. 7 depicts all the involved features (input, output, and the internally generated ones) as arrays with dimensions that visually reflect the actual feature dimension. The operations applied to each feature are indicated with continuous lines, where RB, MP and US, and 1x1 convolution stand for the following type of operation: RB: residual block, MP: max-pooling, US: Up-sampling. MP+RB means that Max-pooling and residual block operation are performed. RB+US means that residual block operation and up-sampling are performed. Skip connection operations SKP, which copy the input from the encoder to the corresponding layer of the decoder, are instead indicated with dashed lines. In Fig. 7, the output dimensions at each single layer are shown in brackets. For the sake of simplicity, the used notation implies that the first dimension (i.e. M) identifies a two-dimensional ($M \times M$) array.

The employed residual block operations are the ensemble of convolutional blocks (CONV), batch normalization (BN), and Rectified Linear Unit (ReLU) activation functions, in the order depicted in Fig. 8.

Concerning the handling of the input data IN before the application of the CNN, first the amplitude $A$ is estimated by averaging the intensities of the two SLCs and then applying the maximum likelihood estimation of the amplitude, computed within a two-dimensional window with size $w \times w$ (in this case $w = 3$):

$$\hat{A} = \sqrt{\sum_{3 \times 3} \frac{|z_1|^2 + |z_2|^2}{2}} \qquad (11)$$

Secondly, the normalized complex interferogram $\gamma$ from the SLCs pair is computed. Furthermore, given that the interferogram is a complex number, the estimation process is applied on its real and imaginary parts $\gamma_R = Re\{\gamma\}$ and $\gamma_I = Im\{\gamma\}$ separately.

From the noise model it is known that the real and imaginary parts of the complex interferogram are mutually correlated. A joint processing of these two quantities is required in order to exploit this property in the estimation process. This requirement could be handled by using complex valued neural networks, which are a relatively new and less investigated field of research.

It is proposed to resort to the use of a decorrelating transform prior to the actual processing. This solution, even if sub-optimal, has already been applied in a large variety of image processing problems with good results. In the present case, it allows to separately process the real and imaginary parts of the complex interferogram and, therefore, to build the architecture on established network models already successfully applied to different research fields.

The input data is partitioned in $64 \times 64$ pixels overlapping patches with a stride of 8 pixels along both rows and columns, as further detailed in the previous part of this document.

For each input patch, the Karhunen-Loève transform D is applied:

$$\begin{pmatrix} a \\ b \end{pmatrix} = D \begin{pmatrix} \gamma_R \\ \gamma_I \end{pmatrix}, \qquad (12)$$

where $a$ and $b$ are the decorrelated quantities corresponding to the real and imaginary parts of the noisy normalized complex interferogram, respectively. These quantities are the actual input to the network: $x = (a, b)$.

The decorrelating matrix $D$ has the following expression:

$$D = \begin{pmatrix} \cos(\widehat{\varphi_p}) & \sin(\widehat{\varphi_p}) \\ -\sin(\widehat{\varphi_p}) & \cos(\widehat{\varphi_p}) \end{pmatrix} \qquad (13)$$

and is resort to the maximum likelihood approach [1] for the estimation of the noise-free parameter $\widehat{\varphi_p}$ over the whole training patch:

$$\hat{\varphi} = \arg\left(\sum_{i \in patch} z_{1_i} \cdot z_{2_i}^*\right) \qquad (14)$$

where the operator arg() computes the argument of the complex function in the brackets.

The output of the network need further processing during the training and test stages as well as done for the input data.

In output the feature map $F(x) = (\hat{a}, \hat{b})$ is obtained.

In order to retrieve the estimation of the real and imaginary parts of the normalized complex interferogram over the patch, the Karhunen-Loève transform has to be inverted.

$$\begin{pmatrix} \widehat{\gamma_R} \\ \widehat{\gamma_I} \end{pmatrix} = D^{-1} \begin{pmatrix} \hat{a} \\ \hat{b} \end{pmatrix} \qquad (15)$$

Then all the estimated patches are aggregated to form a whole image with the same dimension of the input one. Particularly, each patch is brought back to its original position and average overlapping areas in order to avoid discontinuity in the reconstructed output image.

Finally, the estimated interferometric phase and coherence is obtained as:

$$\hat{\varphi} = \tan^{-1}\left(\frac{\widehat{\gamma_I}}{\widehat{\gamma_R}}\right) \qquad (16)$$

$$\hat{\rho} = \sqrt{\widehat{\gamma_R}^2 + \widehat{\gamma_I}^2} \qquad (17)$$

For the optimization of the network parameters, a L2-norm ($L_2$) loss function is exploited, together with a regularization term ($R$), which penalizes output values outside the interval [-1,1].

Note that, differently from the usual L1-norm regularization, the term $R$ only applies to the output if its absolute value exceeds the unit value. The reason of this choice relies in the fact that the noise-free normalized interferogram has unitary maximum modulus, differently from the corresponding noisy version.

The overall loss function $L$ is defined as:

$$L(a_0, b_0, \hat{a}, \hat{b}) =$$

$$= L_2(a_0 - \hat{a}, b_0 - \hat{b}) + \lambda \cdot R(\hat{a}, \hat{b}) = \left\| [a_0 - \hat{a}, b_0 - \hat{b}] \right\|_2 + \lambda \cdot \left\| \max(0, |[\hat{a}, \hat{b}]| - 1) \right\|_1 \qquad (18)$$

where $a$ and $b$ are defined previously in this document, while the subscript 0 and the hat symbol indicate the corresponding noise-free and estimated parameters, respectively. The term $\lambda$ weights the regularization function with respect to the L2-norm and can be empirically set after preliminary experiments.

Note that, since the network is trained on decorrelated input features, the noise-free reference according to the Karhunen-Loève transform is also transformed.

For training the CNN, a data set of synthetic interferometric images according to the following description has been generated to proof accuracy of the described method, by utilizing the proposed strategy.

According to the proposed strategy, for generating the interferometric phase images, two TanDEM-X scenes over Austria, acquired in Stripmap mode, are simulated. For each of them, the corresponding footprint on ground is considered and an interferometric acquisition is simulated using nominal TanDEM-X bistatic configuration parameters (e.g. satellites orbit position and ground resolution of 3 m). From a back-geocoded version of the Shuttle Radar Topography Mission DEM [16], cut on the corresponding TanDEM-X footprint, the synthetic interferometric phase image is retrieved and the flat Earth component is removed. Afterwards, such phase images are split into patches of 256×256 pixels and the algorithm used by Sica et al. in [7] is applied to classify them into two different categories: characterized by the presence of fringe patterns at low and high frequency, respectively. Out of all the considered patches 350 low-frequency and 250 high frequency fringe patches are randomly selected. For the generation of the amplitude and coherence images, it is relied on the NWPU-RESISC45 data set [17], and 400 optical images from the extended data set are randomly selected.

100 sample patches of 256×256 pixels are generated for each of the 6 cases explained above and depicted in Fig. 6. Overall, in a data set of 600 patches is obtained.

The choice of the number of patches per case depends on the specific type and dimension of CNN. In this example a simplified version of the U-Net model is used, which has a relatively small number of hyper-parameters to train and therefore need a lower data set dimension. The whole data set is split in two subsets, one for the training (90%) and one for the validation (10%), leading to have 540 images for training and 60 for the validation.

The test of the network performance is shown on an independent data set of synthetic images, generated as in Sica et al. [6].

Four different cases are considered:

- Cone: amplitude as bottom-to-top increasing ramp, coherence as left-to-right ramp, and wrapped phase corresponding to a geometric cone;
- Peaks: amplitude and coherence as in the previous case and phase corresponding to a series of wrapped peaks;
- Ramp: amplitude set to a constant value, coherence as left-to right ramp, phase as bottom-to-top oriented wrapped phase ramp. The amplitude is kept constant in order not to interfere with the frequency variations of the phase fringes.
- Squares: amplitude showing the same pattern of small geometric squares as the phase image, with intensities decreasing top-to-bottom (values between 25 and 255), coherence as left-to-right ramp, and phase showing abrupt phase jumps in correspondence of each square's borders. This particular case accounts for amplitude-phase correlations, typical of, e.g., urban scenarios.

EP 3 896 482 B1

For each combination of amplitude, coherence, and phase, 10 noisy images are generated by using 10 different random noise realizations, so that, overall, 40 different images are utilized. It is important to note that, even though similar patterns can be found in nature, the synthetic patterns, considered in the test data set, have not been specifically used for training the network.

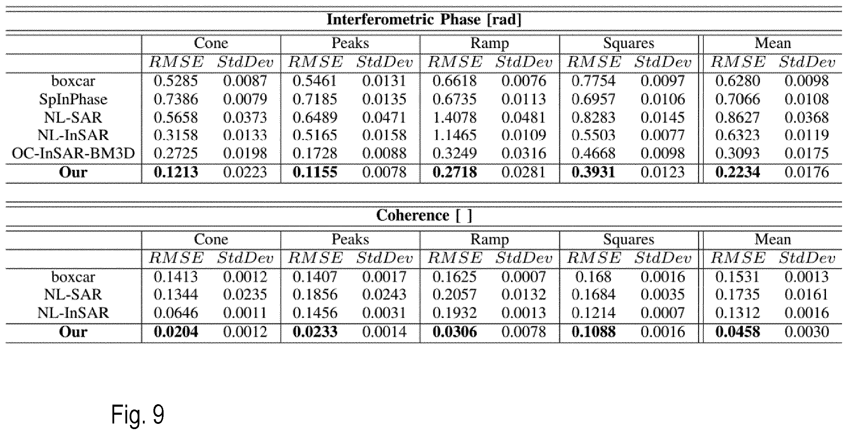

As a result, it could be shown that the network is able to perform better than any other state-of-the-art filter. This result suggests that the proposed strategy for the creation of the data set is very powerful and that the created data set is capable to generalize the training problem. Quantitative results, in terms of Root Mean Squared Error (RMSE) are shown in the table in Fig. 9.

References

[1] M. Seymour and I. Cumming, "Maximum likelihood estimation for SAR interferometry," in IEEE International Geoscience and Remote Sensing Symposium, 1994, pp. 2272-2275.

[2] J.-S. Lee, K. Papathanassiou, T. Ainsworth, M. Grunes, and A. Reigber, "A new technique for noise filtering of SAR interferometric phase images," IEEE Transactions on Geoscience and Remote Sensing, vol. 36, no. 5, pp. 1456-1465, 1998.

[3] S. Fu, X. Long, X. Yang, and Q. Yu, "Directionally adaptive filter for synthetic aperture radar interferometric phase images," IEEE Transactions on Geoscience and Remote Sensing, vol. 51, no. 1, pp. 552-559, 2013.

[4] C.-A. Deledalle, L. Denis, and F. Tupin, "NL-InSAR: Nonlocal interferogram estimation," IEEE Transactions on Geoscience and Remote Sensing, vol. 49, no. 4, pp. 1441-1452, 2011.

[5] C.-A. Deledalle, L. Denis, F. Tupin, A. Reigber, and M. Jäger, "NLSAR: A unified nonlocal framework for resolution-preserving (Pol)(In) SAR denoising," IEEE Transactions on Geoscience and Remote Sensing, vol. 53, no. 4, pp. 2021-2038, 2015.

[6] F. Sica, D. Cozzolino, X. X. Zhu, L. Verdoliva, and G. Poggi, "InSARBM3D: A Nonlocal Filter for SAR Interferometric Phase Restoration," IEEE Transactions on Geoscience and Remote Sensing, vol. 56, no. 6, pp. 3456-3467, 2018.

[7] F. Sica, D. Cozzolino, L. Verdoliva, and G. Poggi, "The OffsetCompensated Nonlocal Filtering of Interferometric Phase," MDPI Remote Sensing, vol. 9, no. 10, p. 1359, 2018.

[8] R. Goldstein and C. Werner, "Radar interferogram filtering for geophysical applications," Geophysical Research Letters, vol. 25, no. 21, pp. 4035-4038, 1998.

[9] I. Baran, M.P. Stewart, B.M.Kampes, Z.Perski, and P. Lilly, "A modification to the Goldstein radar interferogram filter," IEEE Transactions on Geoscience and Remote Sensing, vol. 41, no. 9, pp. 2114-2118, 2003.

[10] C. Lopez-Martinez and X. Fabregas, "Modeling and reduction of SAR interferometric phase noise in the wavelet domain," IEEE Transactions on Geoscience and Remote Sensing, vol. 40, no. 12, pp. 2553-2566, 2002.

[11] V. Jain and S. Seung, "Natural image denoising with convolutional networks,"Advances in Neural Information Processing Systems, pp. 679-776, 2009.

[12] K. Zhang, W. Zuo, Y. Chen, D. Meng, and L. Zhang, "Beyond a Gaussian denoiser: Residual learning of deep cnn for image denoising," IEEE Transaction on Image Processing, vol. 26, no. 7, pp. 3142-3155, Jul 2017.

[13] N. K. Kottayil, A. Zimmer, S. Mukherjee, X. Sun, P. Ghuman, and I. Cheng, "Accurate pixel-based noise estimation for InSAR interferograms", IEEE SENSORS, pp. 1-4, October 2018.

[14] S. Mukherjee, A. Zimmer, N. K. Kottayil, X. Sun, P. Ghuman, and I. Cheng, "CNN-Based InSAR Denoising and Coherence Metric". In 2018 IEEE SENSORS (pp. 1-4). IEEE.

[15] L. Bruzzone, "Multisource labeled data: an opportunity for training deep learning networks," Proceedings of the IEEE International Geoscience and Remote Sensing Symposium, pp. 4799-4802, 2019.

[16] T. Farr, P. Rosen, E. Caro, R. Crippen, R. Duren, S. Hensley, M. Kobrick, M. Paller, E. Rodriguez, L. Roth, D. Seal, S. Shaffer, J. Shimada, U. J., M. Werner, M. Oskin, D. Burbank, and D. Alsdorf, "The shuttle radar topography mission," Reviews of Geophysics, vol. 45, pp. 1-33, 2007.

[17] G. Cheng, J. Han, and X. Lu, "Remote sensing image scene classification: Benchmark and state of the art," Proceedings of the IEEE, pp. 1-17, 2017.

[18] G. Cheng, "Nwpu-resisc45 data set," Sep. 2019, http://www.escience.cn/people/JunweiHan/NWPU-RESISC45.html. [Online]. Available: http://www.escience.cn/people/JunweiHan/NWPU-RESISC45.html#

[19] H. Zebker and J. Villasenor, "Decorrelation in interferometric radar echoes," IEEE Transactions on Geoscience and Remote Sensing, vol. 30, no. 5, pp. 950-959, 1992.

[20] G. Krieger, A. Moreira, H. Fiedler, I. Hajnsek, M. Werner, M. Younis, and M. Zink, "TanDEM-X: A satellite formation for high-resolution SAR interferometry," IEEE Transactions on Geoscience and Remote Sensing, vol. 45, no. 11, 2007.

[21] R. Hawkins, E. Attema, R. Crapolicchio, P. Lecomte, J. Closa, P. Meadows, and S. Srivastava, "Stability of Amazon backscatter at C-Band: Spaceborne results from ERS-1/2 and RADARSAT-1." European Space Agency Report, p. 99, February 2000.
[22] M. Martone, P. Rizzoli, and G. Krieger, "Volume decorrelation effects in TanDEM-X interferometric SAR data," IEEE Geoscience and Remote Sensing Letters, vol. 13, no. 12, pp. 1812-1816, 2016.

## Claims

1. A method for the computer-implemented generation of a synthetic data set for training a convolutional neural network for an Interferometric Synthetic Aperture Radar, comprising the steps of:

   i) retrieving of a number of interferometric phase images being generated from a respective digital elevation model, DEM, where each digital elevation model, DEM, is back-geocoded from an image taken with a SAR system using a known acquisition geometry;
   ii) generation of a number of amplitude images and coherence images by providing different patterns derived from two sets, a first set comprising ramp profiles representing an increasing trend in one direction and a second set comprising natural patterns corresponding to scenarios taken from remotely sensed optical images and by mapping the natural pattern digital values into the same scale used for the ramp profile digital values;
   iii) generation of a number of noisy images by repeatedly grouping one of the phase images, one of the amplitude images and one of the coherence images into a triple and combining each triple to form a respective noisy image, wherein each of the noisy images is assigned to one of a plurality of different categories.

2. The method according to claim 1, wherein the phase images are classified into one of two different categories, where the phase images of a first category of the two different categories are **characterized by** the presence of fringe patterns at low frequency and the phase images of a second category of the two different categories are **characterized by** the presence of fringe patterns at high frequency.

3. The method according to claim 1 or 2, wherein

   - a first part of the amplitude images is represented by a first ramp profile with an increasing trend from left-to-right, or vice versa,
   - a second part of the amplitude images is represented by a second ramp profile with an increasing trend from top-to-bottom, or vice versa,
   - a third part of the amplitude images is represented by the natural patterns, where the natural pattern digital values are mapped into a first scale used for the ramp profile digital values.

4. The method according to one of the preceding claims, wherein

   - a first part of the coherence images is represented by a ramp profile with an increasing trend from left-to-right, or vice versa,
   - a second part of the coherence images is represented by the natural patterns, where the natural pattern digital values are mapped into a second scale used for the ramp profile digital values, the second scale being different from the first scale.

5. The method according to claim 4, wherein the second scale consists of digital values between 0 and 1, where digital values of the natural pattern and/or the ramp profile being smaller than a first threshold value are assigned to a random value between 0 and the first threshold value.

6. The method according to one of the preceding claims, wherein the natural patterns display a large variety of different scenarios, ranging from natural environments to man-made structures.

7. The method according to one of the preceding claims, wherein the phase images, the amplitude images and the coherence images are grouped in at least two of the following the number of different categories:

   Category C1: a given number of amplitude images of the first part of the amplitude images;

   the same given number of coherence images of the first part of the coherence images;
   a part of the given number of phase images of the first category and the remainder of the given number of phase images of the second category;

Category C2: a given number of amplitude images of the second part of the amplitude images;

the same given number of coherence images of the first part of the coherence images;
a part of the given number of phase images of the first category and the remainder of the given number of phase images of the second category;

Category C3: a given number of amplitude images of the third part of the amplitude images;

the same given number of coherence images of the first part of the coherence images;
a part of the given number of phase images of the first category and the remainder of the given number of phase images of the second category;

Category C4: a given number of amplitude images of the second part of the amplitude images;

the same given number of coherence images of the second part of the coherence images;
a part of the given number of phase images of the first category and the remainder of the given number of phase images of the second category;

Category C5: a given number of amplitude images of the third part of the amplitude images;

the same given number of coherence images of the second part of the coherence images;
a part of the given number of phase images of the first category and the remainder of the given number of phase images of the second category;

Category C6: a given number of amplitude images of the third part of the amplitude images;

the same given number of coherence images of the second part of the coherence images;
the same given number of phase images of a third category **characterized by** the presence of steps.

8. The method according to claim 7, wherein the phase image of the third category is generated based on a coherence image **characterized by** the presence of fringe patterns at low frequency by pixelwise

- segmenting the corresponding coherence for digital values above a second threshold value, using two different intervals, a first interval being defined between the second threshold value and a third threshold value, and a second interval being defined between the third threshold value and 1,
- associating a random constant phase jump to each segment, allowing for phase jumps between 0 and an upper threshold, which preferably is chosen up to $\pi$; and
- adding the phase jump to a phase image of the first category.

9. The method according to claim 7 or 8, wherein the phase jump results from two or more adjacent smaller phase jumps.

10. The method according to one of claims 7 to 9, wherein a combination of one phase image, one amplitude image and one coherence image of a respective category is performed.

11. A method for training a convolutional neural network for an Interferometric Synthetic Aperture Radar, comprising the steps of:

i) generation of a synthetic training data set with noisy images according to one of the preceding claims 1 to 10;
ii) training of the convolutional neural network with the training data set.

12. The method according to claim 11, wherein the convolutional neural network is based on a U-Net model using a three-layer decoding path with skip connections.

13. The method according to claim 12, wherein at each layer, in a residual block architecture, an input is connected to an output through a shortcut connection in order to match the output dimensions with the input ones.

14. The method according to one of claims 11 to 13, wherein each of the noisy images inputted to the convolutional neural network is preprocessed by a normalization, followed by a decorrelation transformation.

15. The method according to claim 13, wherein the normalization comprises

- computing a normalized complex interferogram from the noisy image;
- estimating an amplitude by averaging intensities of two complex SAR images of the noisy image, where the estimation is applied to real and imaginary parts separately;
- applying a maximum-likelihood estimation of the amplitude within a two-dimensional window.

16. The method according to one of claims 11 to 15, wherein for optimization of network parameters of the convolutional neural network a L2-norm ($L_2$) loss function is exploited, together with a regularization term (R), which applies to output values of the convolutional neural network if its absolute value is outside the interval [-1,1].

17. The method according to claim 16, wherein the overall loss function L is defined as:

$$L\left(a_0, b_0, \hat{a}, \hat{b}\right) =$$

$$= L_2\left(a_0 - \hat{a}, b_0 - \hat{b}\right) + \lambda \cdot R\left(\hat{a}, \hat{b}\right) = \left\|\left[a_0 - \hat{a}, b_0 - \hat{b}\right]\right\|_2 +$$

$$\lambda \cdot \left\|\max\left(0, \left|\left[\hat{a}, \hat{b}\right]\right| - 1\right)\right\|_1$$

where $a$ and $b$ are decorrelated quantities corresponding to the real and imaginary parts of the noisy normalized complex interferogram, while the subscript 0 and the hat symbol indicate the corresponding noise-free and estimated parameters, respectively, and the term $\lambda$ weights the regularization function with respect to the L2-norm.

18. A computer program product with program code, which is stored on a non-transitory machine-readable carrier, configured for carrying out a method according to one of claims 1 to 10 when the program code is executed on a computer.

**Patentansprüche**

1. Verfahren zur rechnergestützten Erzeugung eines synthetischen Datensatzes zum Trainieren eines faltenden neuronalen Netzwerks für ein interferometrisches Radar mit synthetischer Apertur, das die folgenden Schritte umfasst:

i) Abrufen einer Anzahl von interferometrischen Phasenbildern, die aus einem jeweiligen digitalen Höhenmodell, DEM, erzeugt werden, wobei jedes digitale Höhenmodell, DEM, aus einem mit einem SAR-System unter Verwendung einer bekannten Erfassungsgeometrie aufgenommenen Bild rückcodiert wird;
ii) Erzeugung einer Anzahl von Amplitudenbildern und Kohärenzbildern durch Bereitstellung verschiedener Muster, die von zwei Sätzen abgeleitet sind, wobei ein erster Satz Rampenprofile umfasst, die eine zunehmende Tendenz in einer Richtung darstellen, und ein zweiter Satz natürliche Muster umfasst, die Szenarien entsprechen, die aus optischen Fernerkundungsbildern entnommen wurden, und durch Abbildung der digitalen Werte der natürlichen Muster auf dieselbe Skala, die für die digitalen Werte der Rampenprofile verwendet wird;
iii) Erzeugung einer Anzahl von verrauschten Bildern durch wiederholtes Gruppieren eines der Phasenbilder, eines der Amplitudenbilder und eines der Kohärenzbilder zu einem Tripel und Kombinieren jedes Tripels, um ein entsprechendes verrauschtes Bild zu bilden, wobei jedes der verrauschten Bilder einer von mehreren verschiedenen Kategorien zugeordnet wird.

2. Verfahren nach Anspruch 1, wobei die Phasenbilder in eine von zwei verschiedenen Kategorien eingeteilt werden, wobei die Phasenbilder einer ersten Kategorie der zwei verschiedenen Kategorien durch das Vorhandensein von Streifenbildern bei niedriger Frequenz gekennzeichnet sind und die Phasenbilder einer zweiten Kategorie der zwei verschiedenen Kategorien durch das Vorhandensein von Streifenbildern bei hoher Frequenz gekennzeichnet sind.

**3.** Verfahren nach Anspruch 1 oder 2, wobei

- ein erster Teil der Amplitudenbilder durch ein erstes Rampenprofil mit einer von links nach rechts ansteigenden Tendenz dargestellt wird, oder umgekehrt,
- ein zweiter Teil der Amplitudenbilder durch ein zweites Rampenprofil dargestellt wird, das von oben nach unten ansteigt, oder umgekehrt,
- ein dritter Teil der Amplitudenbilder wird durch die natürlichen Muster dargestellt, wobei die digitalen Werte der natürlichen Muster auf eine erste Skala abgebildet werden, die für die digitalen Werte des Rampenprofils verwendet wird.

**4.** Verfahren nach einem der vorhergehenden Ansprüche, wobei

- ein erster Teil der Kohärenzbilder durch ein Rampenprofil mit ansteigender Tendenz von links nach rechts dargestellt wird, oder umgekehrt,
- ein zweiter Teil der Kohärenzbilder durch die natürlichen Muster dargestellt wird, wobei die digitalen Werte der natürlichen Muster auf eine zweite Skala abgebildet werden, die für die digitalen Werte des Rampenprofils verwendet wird, wobei sich die zweite Skala von der ersten Skala unterscheidet.

**5.** Verfahren nach Anspruch 4, wobei die zweite Skala aus digitalen Werten zwischen 0 und 1 besteht, wobei digitale Werte des natürlichen Musters und/oder des Rampenprofils, die kleiner als ein erster Schwellenwert sind, einem Zufallswert zwischen 0 und dem ersten Schwellenwert zugeordnet werden.

**6.** Verfahren nach einem der vorhergehenden Ansprüche, wobei die natürlichen Muster eine große Vielfalt unterschiedlicher Szenarien darstellen, die von natürlichen Umgebungen bis hin zu von Menschen geschaffenen Strukturen reichen.

**7.** Verfahren nach einem der vorhergehenden Ansprüche, wobei die Phasenbilder, die Amplitudenbilder und die Kohärenzbilder in mindestens zwei der folgenden Anzahl unterschiedlicher Kategorien gruppiert werden:

Kategorie C1: eine vorgegebene Anzahl von Amplitudenbildern des ersten Teils der Amplitudenbilder;

die gleiche vorgegebene Anzahl von Kohärenzbildern des ersten Teils der Kohärenzbilder;
ein Teil der vorgegebenen Anzahl von Phasenbildern der ersten Kategorie und der Rest der vorgegebenen Anzahl von Phasenbildern der zweiten Kategorie;

Kategorie C2: eine vorgegebene Anzahl von Amplitudenbildern des zweiten Teils der Amplitudenbilder;

die gleiche vorgegebene Anzahl von Kohärenzbildern des ersten Teils der Kohärenzbilder;
ein Teil der vorgegebenen Anzahl von Phasenbildern der ersten Kategorie und der Rest der vorgegebenen Anzahl von Phasenbildern der zweiten Kategorie;

Kategorie C3: eine vorgegebene Anzahl von Amplitudenbildern des dritten Teils der Amplitudenbilder;

die gleiche vorgegebene Anzahl von Kohärenzbildern des ersten Teils der Kohärenzbilder;
ein Teil der vorgegebenen Anzahl von Phasenbildern der ersten Kategorie und der Rest der vorgegebenen Anzahl von Phasenbildern der zweiten Kategorie;

Kategorie C4: eine vorgegebene Anzahl von Amplitudenbildern des zweiten Teils der Amplitudenbilder;

die gleiche vorgegebene Anzahl von Kohärenzbildern des zweiten Teils der Kohärenzbilder;
ein Teil der vorgegebenen Anzahl von Phasenbildern der ersten Kategorie und der Rest der vorgegebenen Anzahl von Phasenbildern der zweiten Kategorie;

Kategorie C5: eine vorgegebene Anzahl von Amplitudenbildern des dritten Teils der Amplitudenbilder;

die gleiche vorgegebene Anzahl von Kohärenzbildern des zweiten Teils der Kohärenzbilder;
ein Teil der vorgegebenen Anzahl von Phasenbildern der ersten Kategorie und der Rest der vorgegebenen Anzahl von Phasenbildern der zweiten Kategorie;

Kategorie C6: eine vorgegebene Anzahl von Amplitudenbildern des dritten Teils der Amplitudenbilder;

die gleiche vorgegebene Anzahl von Kohärenzbildern des zweiten Teils der Kohärenzbilder;
die gleiche vorgegebene Anzahl von Phasenbildern einer dritten Kategorie, die durch das Vorhandensein von Stufen gekennzeichnet ist.

8. Verfahren nach Anspruch 7, wobei das Phasenbild der dritten Kategorie auf der Grundlage eines Kohärenzbildes erzeugt wird, das durch das Vorhandensein von Streifenbildern bei niedriger Frequenz durch pixelweise

- Segmentierung der entsprechenden Kohärenz für digitale Werte oberhalb eines zweiten Schwellenwerts unter Verwendung von zwei verschiedenen Intervallen, wobei ein erstes Intervall zwischen dem zweiten Schwellenwert und einem dritten Schwellenwert und ein zweites Intervall zwischen dem dritten Schwellenwert und 1 definiert ist,
- Zuordnung eines zufälligen konstanten Phasensprungs zu jedem Segment, wobei Phasensprünge zwischen 0 und einem oberen Schwellenwert, der vorzugsweise bis zu $\pi$ gewählt wird, zulässig sind; und
- Hinzufügen des Phasensprungs zu einem Phasenbild der ersten Kategorie.

9. Verfahren nach Anspruch 7 oder 8, wobei der Phasensprung aus zwei oder mehr benachbarten kleineren Phasensprüngen resultiert.

10. Verfahren nach einem der Ansprüche 7 bis 9, wobei eine Kombination eines Phasenbildes, eines Amplitudenbildes und eines Kohärenzbildes einer jeweiligen Kategorie durchgeführt wird.

11. Verfahren zum Trainieren eines faltenden neuronalen Netzwerks für ein interferometrisches Radar mit synthetischer Apertur, das die folgenden Schritte umfasst:

i) Erzeugung eines synthetischen Trainingsdatensatzes mit verrauschten Bildern nach einem der vorhergehenden Ansprüche 1 bis 10;
ii) Training des faltenden neuronalen Netzwerks mit dem Trainingsdatensatz.

12. Verfahren nach Anspruch 11, wobei das faltende neuronale Netzwerk auf einem U-Netz-Modell basiert, das einen dreischichtigen Dekodierungspfad mit Skip-Verbindungen verwendet.

13. Verfahren nach Anspruch 12, wobei in jeder Schicht in einer Restblockarchitektur ein Eingang mit einem Ausgang über eine Verknüpfung verbunden ist, um die Ausgangsdimensionen an die Eingangsdimensionen anzupassen.

14. Verfahren nach einem der Ansprüche 11 bis 13, wobei jedes der verrauschten Bilder, die in das faltende neuronale Netzwerk eingegeben werden, durch eine Normalisierung vorverarbeitet wird, gefolgt von einer Dekorrelationstransformation.

15. Verfahren nach Anspruch 13, wobei die Normalisierung Folgendes umfasst

- Berechnung eines normalisierten komplexen Interferogramms aus dem verrauschten Bild;
- Schätzung einer Amplitude durch Mittelung der Intensitäten von zwei komplexen SAR-Bildern des verrauschten Bildes, wobei die Schätzung getrennt auf Real- und Imaginärteil angewendet wird;
- Anwendung einer Maximum-Likelihood-Schätzung der Amplitude innerhalb eines zweidimensionalen Fensters.

16. Verfahren nach einem der Ansprüche 11 bis 15, wobei zur Optimierung der Netzwerkparameter des faltenden neuronalen Netzwerks eine L2-Norm ($L_2$) Verlustfunktion zusammen mit einem Regularisierungsterm (R) verwendet wird, der auf Ausgabewerte des faltenden neuronalen Netzwerks angewendet wird, wenn sein absoluter Wert außerhalb des Intervalls [-1,1] liegt.

17. Verfahren nach Anspruch 16, wobei die Gesamtverlustfunktion L definiert ist als:

$$L\left(a_0, b_0, \hat{a}, \hat{b}\right) =$$

$$= L_2\left(a_0 - \hat{a}, b_0 - \hat{b}\right) + \lambda \cdot R\left(\hat{a}, \hat{b}\right) = \left\|\left[a_0 - \hat{a}, b_0 - \hat{b}\right]\right\|_2 +$$

$$\lambda \cdot \left\|\max\left(0, \left|\left[\hat{a}, \hat{b}\right]\right| - 1\right)\right\|_1$$

wobei *a* und b dekorrelierte Größen sind, die den Real- und Imaginärteilen des verrauschten normalisierten komplexen Interferogramms entsprechen, während der Index 0 und das Hütchen-Symbol die entsprechenden rauschfreien bzw. geschätzten Parameter bezeichnen, und der Term $\lambda$ die Regularisierungsfunktion in Bezug auf die L2-Norm gewichtet.

**18.** Computerprogrammprodukt mit Programmcode, der auf einem nicht-flüchtigen maschinenlesbaren Träger gespeichert ist, konfiguriert zum Ausführen eines Verfahrens nach einem der Ansprüche 1 bis 10, wenn der Programmcode auf einem Computer ausgeführt wird.

**Revendications**

**1.** Procédé de génération mise en oeuvre par ordinateur d'un ensemble de données synthétiques pour l'apprentissage d'un réseau neuronal convolutif pour un radar à synthèse d'ouverture interférométrique, comprenant les étapes de :

i) récupération d'un certain nombre d'images de phase interférométrique qui sont générées à partir d'un modèle numérique d'élévation, MNE, respectif, où chaque modèle numérique d'élévation, MNE, est géocodé en retour à partir d'une image prise avec un système RSO utilisant une géométrie d'acquisition connue ;
ii) génération d'un certain nombre d'images d'amplitude et d'images de cohérence en fournissant différents motifs dérivés de deux ensembles, un premier ensemble comprenant des profils de rampe représentant une tendance croissante dans une direction et un second ensemble comprenant des motifs naturels correspondant à des scénarios prélevés d'images optiques détectées à distance, et en mappant les valeurs numériques de motif naturel dans la même échelle utilisée pour les valeurs numériques de profil de rampe ;
iii) génération d'un certain nombre d'images bruyantes en regroupant de manière répétée une des images de phase, une des images d'amplitude et une des images de cohérence en un triplet et combinant chaque triplet pour former une image bruyante respective, dans lequel chacune des images bruyantes est attribuée à une d'une pluralité de catégories différentes.

**2.** Procédé selon la revendication 1, dans lequel les images de phase sont classées en une de deux catégories différentes, où les images de phase d'une première catégorie des deux catégories différentes sont **caractérisées par** la présence de motifs de frange à basse fréquence et les images de phase d'une deuxième catégorie des deux catégories différentes sont **caractérisées par** la présence de motifs de frange à haute fréquence.

**3.** Procédé selon la revendication 1 ou 2, dans lequel

- une première partie des images d'amplitude est représentée par un premier profil de rampe avec une tendance croissance de gauche à droite, ou vice versa,
- une deuxième partie des images d'amplitude est représentée par un second profil de rampe avec une tendance croissance de haut en bas, ou vice versa,
- une troisième partie des images d'amplitude est représentée par les motifs naturels, où les valeurs numériques de motif naturel sont mappées dans une première échelle utilisée pour les valeurs numériques de profil de rampe.

**4.** Procédé selon une des revendications précédentes, dans lequel

- une première partie des images de cohérence est représentée par un profil de rampe avec une tendance croissance de gauche à droite, ou vice versa,
- une seconde partie des images de cohérence est représentée par les motifs naturels, où les valeurs numériques de motif naturel sont mappées dans une seconde échelle utilisée pour les valeurs numériques de profil de rampe, la seconde échelle étant différente de la première échelle.

**5.** Procédé selon la revendication 4, dans lequel la seconde échelle est constituée de valeurs numériques entre 0 et 1, où des valeurs numériques du motif naturel et/ou du profil de rampe qui sont inférieures à une première valeur seuil sont attribuées à une valeur aléatoire entre 0 et la première valeur seuil.

**6.** Procédé selon une des revendications précédentes, dans lequel les motifs naturels présentent une grande variété de scénarios différents, allant d'environnements naturels à des structures artificielles.

**7.** Procédé selon une des revendications précédentes, dans lequel les images de phase, les images d'amplitude et les images de cohérence sont regroupées dans au moins deux du nombre suivant de catégories différentes :

Catégorie C1 : un nombre donné d'images d'amplitude de la première partie des images d'amplitude ;

le même nombre donné d'images de cohérence de la première partie des images de cohérence ;
une partie du nombre donné d'images de phase de la première catégorie et le reste du nombre donné d'images de phase de la deuxième catégorie ;

Catégorie C2 : un nombre donné d'images d'amplitude de la deuxième partie des images d'amplitude ;

le même nombre donné d'images de cohérence de la première partie des images de cohérence ;
une partie du nombre donné d'images de phase de la première catégorie et le reste du nombre donné d'images de phase de la deuxième catégorie ;

Catégorie C3 : un nombre donné d'images d'amplitude de la troisième partie des images d'amplitude ;

le même nombre donné d'images de cohérence de la première partie des images de cohérence ;
une partie du nombre donné d'images de phase de la première catégorie et le reste du nombre donné d'images de phase de la deuxième catégorie ;

Catégorie C4 : un nombre donné d'images d'amplitude de la deuxième partie des images d'amplitude ;

le même nombre donné d'images de cohérence de la seconde partie des images de cohérence ;
une partie du nombre donné d'images de phase de la première catégorie et le reste du nombre donné d'images de phase de la deuxième catégorie ;

Catégorie C5 : un nombre donné d'images d'amplitude de la troisième partie des images d'amplitude ;

le même nombre donné d'images de cohérence de la seconde partie des images de cohérence ;
une partie du nombre donné d'images de phase de la première catégorie et le reste du nombre donné d'images de phase de la deuxième catégorie ;

Catégorie C6 : un nombre donné d'images d'amplitude de la troisième partie des images d'amplitude ;

le même nombre donné d'images de cohérence de la seconde partie des images de cohérence ;
le même nombre donné d'images de phase d'une troisième catégorie **caractérisée par** la présence de marches.

**8.** Procédé selon la revendication 7, dans lequel l'image de phase de la troisième catégorie est générée en fonction d'une image de cohérence **caractérisée par** la présence de motifs de frange à basse fréquence en

- segmentant la cohérence correspondante pour des valeurs numériques au-dessus d'une deuxième valeur seuil, en utilisant deux intervalles différents, un premier intervalle étant défini entre la deuxième valeur seuil et une troisième valeur seuil, et un second intervalle étant défini entre la troisième valeur seuil et 1,
- associant un saut de phase constant aléatoire à chaque segment, autorisant des sauts de phase entre 0 et un seuil supérieur, qui est de préférence choisi jusqu'à $\pi$ ; et
- ajoutant le saut de phase à une image de phase de la première catégorie, pixel par pixel.

**9.** Procédé selon la revendication 7 ou 8, dans lequel le saut de phase résulte de deux sauts de phase plus petits adjacents ou plus.

**10.** Procédé selon une des revendications 7 à 9, dans lequel une combinaison d'une image de phase, d'une image d'amplitude et d'une image de cohérence d'une catégorie respective est réalisée.

**11.** Procédé d'apprentissage d'un réseau neuronal convolutif pour un radar à synthèse d'ouverture interférométrique, comprenant les étapes de :

  i) génération d'un ensemble de données d'apprentissage synthétiques avec des images bruyantes selon une des revendications précédentes 1 à 10 ;
  ii) apprentissage du réseau neuronal convolutif avec l'ensemble de données d'apprentissage.

**12.** Procédé selon la revendication 11, dans lequel le réseau neuronal convolutif est basé sur un modèle U-Net utilisant un trajet de décodage à trois couches avec des connexions de saut.

**13.** Procédé selon la revendication 12, dans lequel au niveau de chaque couche, dans une architecture à blocs résiduels, une entrée est connectée à une sortie par une connexion raccourcie afin de faire correspondre les dimensions de sortie à celles d'entrée.

**14.** Procédé selon une des revendications 11 à 13, dans lequel chacune des images bruyantes entrées vers le réseau neuronal convolutif est prétraitée par une normalisation, suivie d'une transformée de décorrélation.

**15.** Procédé selon la revendication 13, dans lequel la normalisation comprend

  - calculer un interférogramme complexe normalisé à partir de l'image bruyante ;
  - estimer une amplitude en moyennant des intensités de deux images de RSO complexes de l'image bruyante, où l'estimation est appliquée à des parties réelles et imaginaires séparément ;
  - appliquer une estimation de probabilité maximale de l'amplitude au sein d'une fenêtre bidimensionnelle.

**16.** Procédé selon une des revendications 11 à 15, dans lequel pour l'optimisation de paramètres de réseau du réseau neuronal convolutif, une fonction de perte de norme L2 ($L_2$) est exploitée, conjointement à un terme de régularisation ($R$), qui s'applique à des valeurs de sortie du réseau neuronal convolutif si sa valeur absolue est en dehors de l'intervalle [-1,1].

**17.** Procédé selon la revendication 16, dans lequel la fonction de perte globale $L$ est définie comme :

$$L\big(a_0, b_0, \hat{a}, \hat{b}\big) =$$
$$= L_2\big(a_0 - \hat{a}, b_0 - \hat{b}\big) + \lambda \cdot R\big(\hat{a}, \hat{b}\big) = \big\|[a_0 - \hat{a}, b_0 - \hat{b}]\big\|_2 +$$
$$\lambda \cdot \big\|\max\big(0, \big|[\hat{a}, \hat{b}]\big| - 1\big)\big\|_1$$

où $a$ et $b$ sont des quantités décorrélées correspondant aux parties réelles et imaginaires de l'interférogramme complexe normalisé bruyant, tandis que l'indice 0 et le symbole de chapeau indiquent les paramètres exempts de bruit et estimés correspondants, respectivement, et le terme $\lambda$ pondère la fonction de régularisation par rapport à la norme L2.

**18.** Produit de programme informatique avec du code de programme, qui est stocké sur un support non transitoire lisible par machine, configuré pour réaliser un procédé selon une des revendications 1 à 10 lorsque le code de programme est exécuté sur un ordinateur.

EP 3 896 482 B1

Fig. 1

Fig. 2

(a) (b) (c)

Fig. 3

Fig. 4

(a)

(b)

Fig. 5

Fig. 6

Fig. 7

Fig. 8

| Interferometric Phase [rad] | | | | | | | | | | |
|---|---|---|---|---|---|---|---|---|---|---|
| | Cone | | Peaks | | Ramp | | Squares | | Mean | |
| | $RMSE$ | $StdDev$ | $RMSE$ | $StdDev$ | $RMSE$ | $StdDev$ | $RMSE$ | $StdDev$ | $RMSE$ | $StdDev$ |
| boxcar | 0.5285 | 0.0087 | 0.5461 | 0.0131 | 0.6618 | 0.0076 | 0.7754 | 0.0097 | 0.6280 | 0.0098 |
| SpInPhase | 0.7386 | 0.0079 | 0.7185 | 0.0135 | 0.6735 | 0.0113 | 0.6957 | 0.0106 | 0.7066 | 0.0108 |
| NL-SAR | 0.5658 | 0.0373 | 0.6489 | 0.0471 | 1.4078 | 0.0481 | 0.8283 | 0.0145 | 0.8627 | 0.0368 |
| NL-InSAR | 0.3158 | 0.0133 | 0.5165 | 0.0158 | 1.1465 | 0.0109 | 0.5503 | 0.0077 | 0.6323 | 0.0119 |
| OC-InSAR-BM3D | 0.2725 | 0.0198 | 0.1728 | 0.0088 | 0.3249 | 0.0316 | 0.4668 | 0.0098 | 0.3093 | 0.0175 |
| **Our** | **0.1213** | 0.0223 | **0.1155** | 0.0078 | **0.2718** | 0.0281 | **0.3931** | 0.0123 | **0.2234** | 0.0176 |

| Coherence [ ] | | | | | | | | | | |
|---|---|---|---|---|---|---|---|---|---|---|
| | Cone | | Peaks | | Ramp | | Squares | | Mean | |
| | $RMSE$ | $StdDev$ | $RMSE$ | $StdDev$ | $RMSE$ | $StdDev$ | $RMSE$ | $StdDev$ | $RMSE$ | $StdDev$ |
| boxcar | 0.1413 | 0.0012 | 0.1407 | 0.0017 | 0.1625 | 0.0007 | 0.168 | 0.0016 | 0.1531 | 0.0013 |
| NL-SAR | 0.1344 | 0.0235 | 0.1856 | 0.0243 | 0.2057 | 0.0132 | 0.1684 | 0.0035 | 0.1735 | 0.0161 |
| NL-InSAR | 0.0646 | 0.0011 | 0.1456 | 0.0031 | 0.1932 | 0.0013 | 0.1214 | 0.0007 | 0.1312 | 0.0016 |
| **Our** | **0.0204** | 0.0012 | **0.0233** | 0.0014 | **0.0306** | 0.0078 | **0.1088** | 0.0016 | **0.0458** | 0.0030 |

Fig. 9

**REFERENCES CITED IN THE DESCRIPTION**

**Patent documents cited in the description**

- CN 109558859 A
- CN 101876704 B1

**Non-patent literature cited in the description**

- **M. SEYMOUR ; I. CUMMING.** Maximum likelihood estimation for SAR interferometry. *IEEE International Geoscience and Remote Sensing Symposium,* 1994, 2272-2275
- **J.-S. LEE ; K. PAPATHANASSIOU ; T. AINSWORTH ; M. GRUNES ; A. REIGBER.** A new technique for noise filtering of SAR interferometric phase images. *IEEE Transactions on Geoscience and Remote Sensing,* 1998, vol. 36 (5), 1456-1465
- **S. FU ; X. LONG ; X. YANG ; Q. YU.** Directionally adaptive filter for synthetic aperture radar interferometric phase images. *IEEE Transactions on Geoscience and Remote Sensing,* 2013, vol. 51 (1), 552-559
- **C.-A. DELEDALLE ; L. DENIS ; F. TUPIN.** NL-InSAR: Nonlocal interferogram estimation. *IEEE Transactions on Geoscience and Remote Sensing,* 2011, vol. 49 (4), 1441-1452
- **C.-A. DELEDALLE ; L. DENIS ; F. TUPIN ; A. REIGBER ; M. JÄGER.** NLSAR: A unified nonlocal framework for resolution-preserving (Pol)(In) SAR denoising. *IEEE Transactions on Geoscience and Remote Sensing,* 2015, vol. 53 (4), 2021-2038
- **F. SICA ; D. COZZOLINO ; X. X. ZHU ; L. VERDOLIVA ; G. POGGI.** InSARBM3D: A Nonlocal Filter for SAR Interferometric Phase Restoration. *IEEE Transactions on Geoscience and Remote Sensing,* 2018, vol. 56 (6), 3456-3467
- **F. SICA ; D. COZZOLINO ; L. VERDOLIVA ; G. POGGI.** The OffsetCompensated Nonlocal Filtering of Interferometric Phase. *MDPI Remote Sensing,* 2018, vol. 9 (10), 1359
- **R. GOLDSTEIN ; C. WERNER.** Radar interferogram filtering for geophysical applications. *Geophysical Research Letters,* 1998, vol. 25 (21), 4035-4038
- **I. BARAN ; M.P. STEWART ; B.M.KAMPES ; Z.PERSKI ; P. LILLY.** A modification to the Goldstein radar interferogram filter. *IEEE Transactions on Geoscience and Remote Sensing,* 2003, vol. 41 (9), 2114-2118
- **C. LOPEZ-MARTINEZ ; X. FABREGAS.** Modeling and reduction of SAR interferometric phase noise in the wavelet domain. *IEEE Transactions on Geoscience and Remote Sensing,* 2002, vol. 40 (12), 2553-2566
- **V. JAIN ; S. SEUNG.** Natural image denoising with convolutional networks. *Advances in Neural Information Processing Systems,* 2009, 679-776
- **K. ZHANG ; W. ZUO ; Y. CHEN ; D. MENG ; L. ZHANG.** Beyond a Gaussian denoiser: Residual learning of deep cnn for image denoising. *IEEE Transaction on Image Processing,* July 2017, vol. 26 (7), 3142-3155
- **N. K. KOTTAYIL ; A. ZIMMER ; S. MUKHERJEE ; X. SUN ; P. GHUMAN ; I. CHENG.** Accurate pixel-based noise estimation for InSAR interferograms. *IEEE SENSORS,* October 2018, 1-4
- CNN-Based InSAR Denoising and Coherence Metric. **S. MUKHERJEE ; A. ZIMMER ; N. K. KOTTAYIL ; X. SUN ; P. GHUMAN ; I. CHENG.** In 2018 IEEE SENSORS. IEEE, 1-4
- **L. BRUZZONE.** Multisource labeled data: an opportunity for training deep learning networks. *Proceedings of the IEEE International Geoscience and Remote Sensing Symposium,* 2019, 4799-4802
- **T. FARR ; P. ROSEN ; E. CARO ; R. CRIPPEN ; R. DUREN ; S. HENSLEY ; M. KOBRICK ; M. PALLER ; E. RODRIGUEZ ; L. ROTH.** The shuttle radar topography mission. *Reviews of Geophysics,* 2007, vol. 45, 1-33
- **G. CHENG ; J. HAN ; X. LU.** Remote sensing image scene classification: Benchmark and state of the art. *Proceedings of the IEEE,* 2017, 1-17
- **G. CHENG.** *Nwpu-resisc45 data set,* September 2019, http://www.escience.cn/people/Junwei-Han/NWPU-RESISC45.html. [Online
- **H. ZEBKER ; J. VILLASENOR.** Decorrelation in interferometric radar echoes. *IEEE Transactions on Geoscience and Remote Sensing,* 1992, vol. 30 (5), 950-959

- **G. KRIEGER ; A. MOREIRA ; H. FIEDLER ; I. HAJNSEK ; M. WERNER ; M. YOUNIS ; M. ZINK.** TanDEM-X: A satellite formation for high-resolution SAR interferometry. *IEEE Transactions on Geoscience and Remote Sensing,* 2007, vol. 45 (11

- **R. HAWKINS ; E. ATTEMA ; R. CRAPOLICCHIO ; P. LECOMTE ; J. CLOSA ; P. MEADOWS ; S. SRIVASTAVA.** Stability of Amazon backscatter at C-Band: Spaceborne results from ERS-1/2 and RADARSAT-1. *European Space Agency Report,* February 2000, 99
- **M. MARTONE ; P. RIZZOLI ; G. KRIEGER.** Volume decorrelation effects in TanDEM-X interferometric SAR data. *IEEE Geoscience and Remote Sensing Letters,* 2016, vol. 13 (12), 1812-1816